Europäisches Patentamt

European Patent Office

Office européen des brevets

(11) Numéro de publication: **0 421 879 A1**

## (12) DEMANDE DE BREVET EUROPEEN

(21) Numéro de dépôt: 90402750.5

(22) Date de dépôt: 04.10.90

(51) Int. Cl.⁵: **A23K 1/16**, A23K 1/04, A23K 1/18, A23J 1/06

(30) Priorité: 04.10.89 FR 8912960

(43) Date de publication de la demande:
10.04.91 Bulletin 91/15

(84) Etats contractants désignés:
AT BE CH DE ES GB GR IT LI LU NL SE

(71) Demandeur: DIEVET S.A.
Parc Industriel d'INCARVILLE
F-27100 Val de Reuil(FR)

(72) Inventeur: Legoy, Maurice
Amfreville Sous Les Monts
F-27380 Fleury S/Andelle(FR)

(74) Mandataire: Petit, Hélène
Cabinet Hélène Petit 94, Avenue Kléber
F-75116 Paris(FR)

(54) Procédé pour la préparation d'aliments pour le bétail évitant la dégradation des acides aminés dans le rumen.

(57) Procédé pour la préparation d'aliments pour le bétail évitant la dégradation des acides aminés dans le rumen, selon lequel on ajoute à l'aliment des acides aminés de synthèse cristallisés, caractérisé en ce qu'il consiste à enrober les acides aminés apportés en complément aux rations alimentaires dans des protéines de sang animal, rendues insolubles par un traitement par la chaleur, cet enrobage étant réalisé par extrusion à température et pression contrôlées d'un mélange de composants alimentaires, de sang ou de cruor et de ces acides aminés.

EP 0 421 879 A1

## PROCÉDÉ POUR LA PRÉPARATION D'ALIMENTS POUR LE BÉTAIL ÉVITANT LA DÉGRADATION DES ACIDES AMINÉS DANS LE RUMEN

La présente invention est relative à un procédé pour la préparation d'aliments pour le bétail qui évite la dégradation immédiate dans le rumen des animaux, c'est-à-dire dans le premier compartiment de leur appareil de rumination des acides aminés contenus dans les protéines naturelles des composants de ces aliments ou ajoutés à ces composants lors de la préparation des aliments.

L'intensification de la production du lait ou de la viande de boucherie, en particulier de boeuf ou de mouton, implique un accroissement sensible des capacités de lactation du bétail et une accélération de ses gains de croissance journaliers. A cet effet, l'alimentation des animaux doit être attentivement contrôlée et en particulier doit pouvoir apporter dans les rations ingérées un complément d'éléments nutritifs appropriés, en augmentant notamment leur concentration en acides aminés.

On sait que, dans une période récente, on a réussi à corriger certaines déficiences des protéines naturelles en divers acides aminés indispensables à la croissance du bétail, en ajoutant aux rations consommées des amino-acides réalisés industriellement et exactement dosés, en quantités et en efficacité. Ces acides aminés cristallisés sont plus ou moins solubles dans l'eau mais en tous cas rapidement utilisés par les micro-organismes contenus dans le bol alimentaire présent dans le rumen de l'animal, soit en l'état, soit après désammoniation progressive, avec un effet favorable sur la croissance et la multiplication de ces micro-organismes.

Toutefois, l'expérience montre que le rendement d'utilisation de ces amino-acides dans ces conditions n'est pas parfait, à la fois dans le rumen, mais plus encore dans la suite de l'appareil digestif de l'animal où ces acides ont pratiquement disparu. Or, pour des animaux très productifs, on a constaté qu'il était nécessaire de réaliser un apport de ces acides aminés au niveau de l'intestin, en particulier en amenant jusqu'à celui-ci des protéines alimentaires non dégradées, riches en acides aminés indispensables, ceci afin de couvrir les besoins de production qui ne peuvent être satisfaits par le seul apport des protéines microbiennes synthétisées dans le rumen et acheminées ensuite dans le restant de l'appareil digestif de l'animal.

En vue de pallier cet inconvénient, on a déjà prévu de protéger le protéines ingérées par l'animal contre leur dégradation dans le rumen par des procédés faisant intervenir un traitement à la chaleur ou une adjonction de formol, de tannins ou de divers additifs chimiques appropriés. Pour la protection de certains amino-acides en particulier, divers procédés d'enrobage permettent leur passage dans le rumen sans que les micro-organisnes présents dans celui-ci agissent de manière trop sensible, notamment lorsque l'enrobage des protéines est réalisé au moyen de préparations à base de formol, d'acides gras insolubles etc...

La présente invention concerne un procédé qui vise encore mieux que jusqu'à présent, a diminuer, voire à supprimer la faculté de dégradation des acides aminés dans le rumen, afin de permettre à ces acides d'atteindre intestin grêle de l'animal où ils peuvent alors exprimer leur pleine efficacité.

Dans ce but, le procédé considéré se caractérise en ce qu'il consiste à enrober les acides aminés apportés en complément aux rations alimentaires, dans des protéines de sang animal, rendues insolubles par un traitement par la chaleur, cet enrobage étant réalisé par extrusion à température et pression contrôlées d'un mélange de composants alimentaires, de sang ou de cruor et de ces acides aminés.

L'extrusion d'un tel mélange, où les acides aminés cristallisés sont intimement mélangés à du sang animal ou à du cruor, c'est-à-dire à la partie du sang débarrassée de son sérum, dans des conditions déterminées de température et de pression, fournit à la sortie d'un appareil d'extrusion classique, un produit homogène où les protèines du sang se sont notamment déposées à la surface des particules du mélange formé avec les composants alimentaires, les acides aminés préalablement incorporés à ceux-ci, mis en solution au cours du processus, se déposant préférentiellement à la surface des particules du mélange, en réalisant une sorte d'encapsulation de ces dernières. En particulier, avec les albumines et les globulines du sang, la capsule d'enrobage ainsi formée procure une barrière efficace pour les acides aminés qui restent protégés vis-à-vis des micro-organismes, notamment puisque, les protéines du sang étant insolubles dans le rumen, elles permettent de conserver autour de certains de ces acides aminés une véritable matrice de protection contre la dégradation, dont les effets subsistent au cours du transfert du bol alimentaire et de sa digestion jusque dans l'intestin.

Selon une caractéristique particulière du procédé considéré, l'extrusion réalisant l'enrobage des acides aminés est effectuée dans des conditions propres à provoquer une élévation de la température du mélange, supérieure à la température de vaporisation de l'eau contenue dans le sang et les composants alimentaires, de manière à réaliser, consécutivement à la brusque chute de pression à la sortie du dispositif d'extrusion, l'élimination instantanée de l'eau du mélange, la température étant alors ramenée en dessous de 100° C.

De préférence, l'élévation de la température est choisie au moins égale à 150° C, de telle sorte que, au minimum 95% de l'eau des composants alimentaires et du sang dans le mélange, qui représente entre 7 et 10 % en poids de celui-ci, soit éliminée.

D'autres caractéristiques particulières du procédé envisagé, apparaîtront encore à travers la relation qui suit d'un exemple de mise en oeuvre, donné à titre indicatif et non limitatif.

Dans un premier temps, on part d'un volume approprié de sang frais en provenance d'abattoirs, dans lesquels il constitue un sous-produit généralement sans utilisation intéressante, ou d'un volume équivalent de cruor, suspension concentrée de globules blancs et rouges et de plaquettes sanguines, après extraction du plasma. On mélange alors à ce volume une quantité choisie d'acides aminés synthétiques, de compositions diverses (aliphatiques, aromatiques, hétérocyliques, etc..., avec le cas échéantles liaisons peptidiques appropriées), adaptées au type d'animal à nourrir et aux objectifs de croissance envisagés, la quantité d'acides aminés ainsi mélangée représentant entre 1 et 5 % en poids du mélange obtenu.

Dans la phase suivante, on ajoute à ce mélange entre 10 et 25 % de composants alimentaires classiques, tels que des céréales, des protéagineux, des tourteaux, des farines animales etc... présentés sous forme de poudre ou de particules broyées. Le mélange ainsi obtenu, après avoir été homogénéisé, est amené à un dispositif d'extrusion comportant, de façon en elle-même classique, une vis et un ensemble de chauffage rapide du mélange, permettant de soumettre simultanément celui-ci à une pression comprise entre 5 et 25 bars et à une température s'élevant entre 130 et 170° C et de préférence comprise entre 150 et 170° C, pendant une période brève et contrôlée, pouvant varier de 3 à 10 secondes.

L'élévation de température réalisée provoque à la sortie de l'extrudeuse une évaporation quasi instantanée de l'eau libre contenue dans le mélange et la rupture des membranes des cellules du sang. Les albumines et globulines du sang se déposent alors à la surface des particules du mélange, en enrobant les molécules d'acides aminés qu'il content et en les rendant inaccessibles à l'action des micro-organismes qui ne peuvent modifier ou dégrader les protéines du sang ainsi traitées par la chaleur.

Le mélange extrudé est ensuite refroidi à environ 30° C à la sortie de l'extrudeuse, avec une teneur en humidité résiduelle ramenée à un niveau suffisamment faible pour permettre sa conservation pratiquement illimitée.

Les aliments ainsi préparés contiennent entre 15 et 50 % de protéines digestibles et 3 à 20 % de matières grasses. Ils contiennent également 1 à 5 % d'acides aminés de synthèse, dont une partie essentielle est parfaitement protégée contre la dégradation dans le rumen des animaux. Les acides aminés libres qu'ils incorporent sont dès lors conservés jusqu'à leur arrivée dans l'intestin grêle où la digestion des protéines du sang par les enzymes protéolytiques permet de libérer ces acides aminés et de les rendre disponibles pour leur assimilation par l'organisme.

Bien entendu, il va de soi que l'invention ne se limite pas à l'exemple de mise en oeuvre décrit ci-dessus ; elle en embrasse au contraire toutes les variantes.

**Revendications**

1 - Procédé pour la préparation d'aliments pour le bétail évitant la dégradation des acides aminés dans le rumen, selon lequel on ajoute à l'aliment des acides aminés de synthèse cristallisés, caractérisé en ce qu'il consiste à enrober les acides aminés apporté en complément aux rations alimentaires dans des protéines de sang animal, rendues insolubles par un traitement par la chaleur, cet enrobage étant réalisé par extrusion à température et pression contrôlées d'un mélange de composants alimentaires, de sang ou de cruor et de ces acides aminés et à effectuer l'extrusion réalisant l'enrobage des acides aminés dans des conditions propres à provoquer une élévation de la température du mélange, supérieure à la température de vaporisation de l'eau contenue dans le sang et les composants alimentaires, de manière à réaliser, consécutivement à la brusque chute de pression à la sortie du dispositif d'extrusion, l'élimination instantanée de cette eau, la température étant alors ramenée en dessous de 100° C.

2 - Procédé selon la revendication 1, caractérisé en ce que l'élévation de temperature s'établit entre 130 et 170° C, et est de préférence au moins égale à 150° C.

3 - Procédé selon l'une des revendications 1 ou 2, caractérisé en ce que la proportion en poids des acides aminés dans le mélange est compris entre 1 et 5%.

4 - Procédé selon l'une quelconque des revendications 1 à 3, caractérisé en ce que les composants alimentaires sont choisis parmi les céréales, les protéagineux, les tourteaux ou les farines animales.

5 - Procédé selon l'une quelconque des revendications 1 à 4, caractérisé en ce que l'élévation de pression dans le mélange au cours de l'extrusion est comprise entre 5 et 25 bars.

6 - Procédé selon l'une quelconque des revendications 1 à 5, caractérisé en ce que l'extrusion du mélange est réalisée un temps compris entre 3 et 10 secondes.

7 - Aliments pour bétail préparés selon le procédé de l'une quelconque des revendications 1 a 5, caractérisés en ce qu'ils contiennent notamment entre 15 et 50 % de protéines digestibles, 3 à 20 % de matières grasses et 1 à 5 % d'acides aminés de synthèse.

**Office européen des brevets**

**RAPPORT DE RECHERCHE EUROPEENNE**

Numéro de la demande

**EP 90 40 2750**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-3 022 579 (T. SCHOENEN)<br>* Revendications 1-5,7-10; page 5, alinéa 4; page 6, alinéa 3; page 7, alinéa 2; page 8, lignes 2-5; page 9, alinéa 2; page 9, alinéa 5 - page 10, alinéa 1 *<br>– – – | 1,7 | A 23<br>K 1/16<br>A 23 K 1/04<br>A 23 K 1/18<br>A 23 J 1/06 |
| A | | 2-6 | |
| Y | FR-A-2 612 371 (DIEVET S.A.)<br>* Revendications 1-9 *<br>– – – | 1,7 | |
| A | | 2-6 | |
| A | US-A-4 798 737 (ELLIS W. BRUNTON et al.)<br>* Colonne 8, lignes 38-63; exemple 1 *<br>– – – | 1-7 | |
| A | EP-A-0 020 231 (C. BAISSE et al.)<br>* Revendications 1,2,10,12-14,24,27-29; page 16, lignes 15-23 *<br>– – – | 1 | |
| A | DERWENT FILE SUPPLIER WPI/L, AN = 84-309694 (50), 1984, Derwent Publications Ltd, Londres, GB;<br>& JP-A-59 193 823 (NIPPON KAYAKU K.K.) 02-11-1984<br>* Résumé *<br>– – – – – | 1 | |
| | | | **DOMAINES TECHNIQUES RECHERCHES (Int. Cl.5)**<br><br>A 23 K<br>A 23 J |

Le présent rapport de recherche a été établi pour toutes les revendications

| Lieu de la recherche | Date d'achèvement de la recherche | Examinateur |
|---|---|---|
| La Haye | 06 novembre 90 | DEKEIREL M.J. |